# EUROPÄISCHE PATENTSCHRIFT

(11) **EP 0 543 302 B1**
(45) Veröffentlichungstag und Bekanntmachung des Hinweises auf die Patenterteilung: **30.10.1996**
(21) Anmeldenummer: 92119507.9
(22) Anmeldetag: 14.11.1992
(51) Int. Cl.: C08J 11/06, B29B 17/02

(54) **Verfahren zum Abtrennen von Aluminiumfolien von PE-Folien oder Kunststoffolien auf Basis von Polyester**
Process for separating aluminium foils from PE-foils or plastic foils based on polyester
Procédé pour la séparation de feuilles d'aluminium de feuilles de polyéthylène ou de feuilles en plastique à base de polyester

(30) Priorität: 18.11.1991 DE 4137895
(43) Veröffentlichungstag der Anmeldung: 26.05.1993
(73) Patentinhaber: Kersting, Johannes, D-59558 Lippstadt (DE)
(72) Erfinder: Kersting, Johannes, D-59558 Lippstadt (DE)
(74) Vertreter: Strauss, Hans-Jochen, Dipl.-Phys., Dr.

(56) Entgegenhaltungen:
- DE-A- 4 217 840
- FR-A- 2 510 428
- US-A- 3 898 344
- US-A- 4 257 536

## Beschreibung

Die Erfindung betrifft ein Verfahren zum Abtrennen von Aluminiumfolien von PE-Folien oder von Kunststoffolien auf Basis von Polyester.

Besonders in der Verpackungsindustrie werden Verbundfolien eingesetzt, die auf ggf. gewachstem Karton aufgebracht, diesen vor Flüssigkeiten, die in der Verpackung enthalten sind, schützen. Derartige Verbundfolien sind Kunststoffolien mit einer Metallfolie, wobei aus Gründen der Lebensmittelhygiene zum einen als Metall Aluminium eingesetzt wird, und zum anderen diese Aluminiumfolien ein- oder beidseitig mit der Kunststoffolie beschichtet sind. Ein im Wesentlichen aus Zellstoff bestehender Karton verstärkt diese Verpackung. Derartige Verpackungen fallen in großen Mengen an, sie bilden ein erhebliches Entsorgungsproblem, zumal das volkswirtschaftliche Interesse auf eine Rückgewinnung des Aluminiums gerichtet ist. Zu dieser Rückgewinnung wird nun zunächst die Kartonage der Verpackung entfernt; dazu wird die Verpackung in Heiß-Wasserbädern behandelt, in denen der Karton in Fasern aufgelöst wird und als Fasergemisch anfällt, das aus dem Wasser der Bäder abgetrennt und als Fasergemisch zurückgewonnen werden kann. Die Verbundfolie bleibt zurück und muß als Sondermüll unter Schwierigkeiten entsorgt werden. Es ist schon bekannt, das Aluminium durch thermische Aufbereitung der Verbundfolien zurückzugewinnen, jedoch ist diese thermische Aufbereitung, bei der die Kunst stoffe der aufgebrachten Folien durch Hitzeeinwirkung zersetzt werden, mit der Lösung von Abgasproblemen verknüpft, selbst wenn die Kunststoffe lediglich "verschwelt" werden und das Schwelgas zu Heizzwecken in die Feuerung zurückgeführt wird.

Hier setzt die Erfindung ein, der die Aufgabe zugrunde liegt, ein Verfahren anzugeben, mit dem eine umweltfreundlichen Rückgewinnung des Aluminiums möglich ist.

Diese Aufgabe wird nun nach der Erfindung durch das in Anspruch 1 angegebene Verfahren gelöst. Bei dieser Behandlung trennen sich die Metallfolien von der Kunststoffolie. Bei dem Einsetzen von mit Polyethylenfolie ein- oder beidseits beschichteten Aluminuiumfolien können sowohl das Aluminium als auch das Polyethylen zurückgewonnen und in eine neue Produktion zurückgeführt werden. Als Säure wird vorteilhaft Fettsäure mit n=1, also Essigsäure genommen wird, die zum einen als handelsüblichen Substanz mit geringem Aufwand bezogen werden kann, die zum anderen Aluminium kaum angreift, und die schließlich ohne Probleme entsorgt werden kann, wobei eventuell gelöstes Aluminium als Aluminiumacetat anfällt, das bei der zur Entsorgung notwendigen Neutralisation aus umweltunschädlichem Aluminiumhydroxyd anfallen würde. Dabei hat sich gezeigt, daß eine Konzentration von um 25% bereits gute Ergebnisse liefert.

Das Verwenden eines oder das Verbleiben in dem dicht geschlossenen Gefäß erlaubt ein kontrolliertes Abkühlen, so daß zum einen die gewünschte bzw. notwendige Zeitspanne bis zum Lösen der Folien voneinander eingehalten werden kann, und zum anderen weitere Säureverluste durch Verdampfen unterbleiben. Dabei kommt es nicht so sehr auf das Ziehen eines möglichst hohen Vakuums an, vielmehr zeigen Versuche, daß der sich beim Abkühlen natürlich einstellende Unterdruck von etwa bis zu 20% unter dem Luftdruck ausreicht, um die Ablösung zu begünstigen.

Mit diesem Verfahren wird ein kostengünstiges und umweltfreundliches Ablösen der Aluminiumfolien von den Kunststoffolien, insbesondere von den bei Lebensmittel verpackung, wie Verpackungsmaterial für Butter, Soßen u.dgl. sowie für Deckel von Lebensmittel-Behältnissen, etwa Joghourtbechern, bevorzugten Polyethylenfolien ermöglicht. Das Verfahren beruht auf der ablösenden Wirkung einer höher konzentrierten Essigsäurelösung, woduch die Bindung zwischen der Metallfolie und der Kunststoffolie gelöst wird. Sie kann weiter auf der physikalischen Einwirkung des Unterdruckes auf zwischen Kunststoffolie und Aluminiumfolie eingeschlossene Luft- oder Wasserreste, die sich wegen der Druckabnahme ausdehnen können und so das Ablösen erleichtern, beruhen.

Das Wesen der Erfindung wird an Hand des folgenden Verfahrensbeispiels beispielhaft näher erläutert: Bei verschiedenen Versuchen wurden unterschiedliche Verbundfolien in einem verschließbaren Gefäß, von denen eventuell vorhandene Kartonagen mit Heißwasser abgelöst worden waren, mit 25%iger Essigsäurelösung überschichtet. Nach Verschließen den Gefäßes wurde der Inhalt auf etwa 100 °C erhitzt für etwa 10 bis 20 Minuten. Danach ließen sich die Kunststoffolien zwar schon von der Aluminium-Unterlage abziehen, jedoch konnten die Kunststoffolien nach einem 2 bis 3 stündigen Abkühlungsintervall leicht von den Aluminiumfolien getrennt werden, wobei bei Bewegung des Bades auch selbständige Trennungen beobachtet wurden. Bei Kunststofffolien etwa auf der Basis von Polyester mußte die Abkühlungzeit auf etwa den doppelten Wert verlängert werden, um ein gleich gutes Ergebnis zu erreichen.

## Patentansprüche

1. Verfahren zum Abtrennen von Aluminiumfolien von PE-Folien oder von Kunststofffolien auf Basis von Polyester, unter Einwirkung einer Fettsäure, **dadurch gekennzeichnet**, daß die Verbundfolie in einer mindestens 20%igen Lösung einer niedrigen Fettsäure mit der allgemeinen Formel CₙH₂ₙ₊₁(COOH) mit n kleiner/gleich 4 auf 100°C bis 122°C unter dem Druck des Wasserdampfes in einem geschlossenen Gefäß erhitzt wird, daß diese Erhitzung für 10 bis 20 Minuten aufrechterhalten und danach abgekühlt wird, und daß nach dem Abkühlen die abgelösten Kunststoffolien von den zurückbleibenden Aluminiumfolien getrennt werden, wobei die Abkühlung in dem nun dicht geschlossenen Gefäß erfolgt, so daß beim Abkühlen ein Unterdruck von bis zu 20% unter dem natürlichen Luftdruck gebildet wird.

2. Verfahren nach Anspruch 1, **dadurch gekennzeichnet**, daß als Fettsäure eine Essigsäure mit n=1 genommen wird.

3. Verfahren nach einem der Ansprüche 1 bis 2, **dadurch gekennzeichnet**, daß das Abkühlen über etwa 2 bis 6 Stunden, vorzugsweise über 3 bis 4 Stunden erstreckt wird.

## Claims

1. Process for detaching aluminium foils from PE foils or from plastic foils on the basis of a polyester under the influence of a fatty acid, characterized in that the compound foil is heated in an at least 20% low fatty acid solution of the general formula CₙH₂ₙ₊₁(COOH), with n being equal to or smaller than 4, to between 100°C and 122°C under steam pressure in an enclosed vessel, in that the heating temperature is maintained for 10 to 20 minutes and is then cooled down, and in that after the cooling down, the detached plastic foils are separated from the remaining aluminium foils, the cooling down taking place in the now tightly closed vessel, so that during the cooling down, a vacuum of up to 20% below atmospheric pressure is created.

2. Process as claimed in Claim 1, characterized in that acetic acid with n=1 is used as fatty acid.

3. Process as claimed in any one of Claims 1 to 2, characterized in that the cooling down period lasts for approximately 2 to 6 hours, preferably for 3 to 4 hours.

## Revendications

1. Procédé pour la séparation de feuilles d'aluminium de feuilles de polyéthylène ou de feuilles en plastique à base de polyester sous l'effet d'un acide gras, caractérisé en ce que la feuille composite est chauffée dans une solution au moins à 20 % d'un acide gras inférieur de formule générale CₙH₂ₙ₊₁(COOH) avec n inférieur/égal à 4 à 100°C jusqu'à 122°C sous la pression de la vapeur d'eau dans un récipient fermé, en ce que le chauffage est maintenu pendant 10 à 20 minutes et ensuite refroidi et en ce qu'après le refroidissement, on sépare les feuilles de plastique détachées des feuilles d'aluminium restantes, le refroidissement s'effectuant dans le récipient maintenant fermé de façon étanche de sorte que lors du refroidissement, il se forme une sous-pression ou vide partiel jusqu'à 20 % au-dessous de la pression d'air naturelle.

2. Procédé selon la revendication 1, caractérisé en ce qu'en tant qu'acide gras, on utilise l'acide acétique avec n = 1.

3. Procédé selon l'une des revendications 1 à 2, caractérisé en ce que le refroidissement s'étend sur environ 2 à 6 heures, de préférence sur 3 à 4 heures.
